(19) Europäisches Patentamt
European Patent Office
Office européen des brevets

(11) Veröffentlichungsnummer: **0 291 704**
**B1**

(12) # EUROPÄISCHE PATENTSCHRIFT

(45) Veröffentlichungstag der Patentschrift: **14.11.90**

(51) Int. Cl.[5]: **F01N 3/02,** B01D 53/36

(21) Anmeldenummer: **88106180.8**

(22) Anmeldetag: **19.04.88**

(54) **Katalytisch aktive Beschichtung von Filtermaterial für Dieselruss-Filter.**

(30) Priorität: **16.05.87 DE 3716446**

(43) Veröffentlichungstag der Anmeldung: **23.11.88 Patentblatt 88/47**

(45) Bekanntmachung des Hinweises auf die Patenterteilung: **14.11.90 Patentblatt 90/46**

(84) Benannte Vertragsstaaten: **DE FR GB IT**

(56) Entgegenhaltungen:
**EP-A- 0 105 113**
**EP-A- 0 154 145**
**EP-A- 0 220 505**
**US-A- 4 510 265**
**US-A- 4 559 193**

(73) Patentinhaber: **DORNIER GMBH, Postfach 1420, D-7990 Friedrichshafen 1(DE)**

(72) Erfinder: **Haas, Jürgen, Dr., Konrad-Adenauer-Strasse 6, D-7778 Markdorf(DE)**
Erfinder: **Plog, Carsten, Dr., J.P.-Hebel-Strasse 13, D-7778 Markdorf(DE)**
Erfinder: **Steinwandel, Jürgen, Dr., Römerweg 1, D-7778 Markdorf(DE)**

(74) Vertreter: **Landsmann, Ralf, Dipl.-Ing., c/o DORNIER GMBH Postfach 1420, D-7990 Friedrichshafen 1(DE)**

EP 0 291 704 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft eine katalytisch aktive Beschichtung von Filtermaterial für Dieselruß-Filter. Die aktive Substanz der Beschichtung besteht hierbei aus einem metalldotierten Zeolith.

Das Abgas von Dieselmotoren enthält Schadstoffe. Die Emission an Kohlenmonoxid und Kohlenwasserstoffen liegt aufgrund des Luftüberschusses niedriger als beim Ottomotor. Hingegen liegt der $NO_X$-Ausstoß im Bereich der zulässigen Grenzwerte. Ein großes Problem im Hinblick auf die Umwelt stellt beim Dieselmotor die Emission von Rußpartikeln dar. Da der Dieselruß aufgrund seines Gehaltes an höhermolekularen Kohlenwasserstoffen, bzw. polykondensierten Aromaten als gesundheitsgefährdend, wenn nicht sogar als cancerogen (Gehalt an 3,4-Benzpyren und Nitroaromaten) angesehen werden muß, ist es erwünscht, geeignete technische Maßnahmen zur Emissionsminderung bei Dieselabgasen bereitzustellen.

Wie die bisherigen Erfahrungen gezeigt haben, reichen motortechnische Maßnahmen zu einer deutlichen Verminderung der Rußemission nicht aus. Daher wurde versucht, die Rußemission durch den Einbau eines Filters, z. B. nach US-Pat. 4,329,162, in den Abgaskanal zu begrenzen. Durch den Rußsammelprozeß verstopft das Filter mit der Zeit, was zu einer Erhöhung des Staudruckes in der Auspuffanlage und damit zu einer Reduzierung der Motorleistung führt. Daher ist von Zeit zu Zeit eine Regenerierung des Filters durch eine Verbrennung des Rußes nötig. Eine thermische Oxidation des Rußes erfolgt jedoch erst bei Temperaturen, die im allgemeinen im Dieselabgas nicht erreicht werden.

Eine Möglichkeit, die Zündung des Dieselrußes auf dem Filter zu unterstützen ist eine Zusatzheizung des Filters zu verwenden. Dies führt jedoch zu einer zusätzlichen Komplizierung des Systems und zu einem erhöhten Energieverbrauch. Gleiches gilt auch für die Zudosierung von Zündhilfsmitteln in den Abgasstrom.

Am aussichtsreichsten für eine technische Realisierung ist ein Katalysator, der die Zündtemperatur des Dieselrußes auf dem Filter herabsetzt. Katalysatoren dieser Art werden in DE-OS 2951 316, DE-OS 3141 713 und EP-A 0 160 482 beschrieben. Der Einsatz von Mischoxid-Katalysatoren setzt zwar die Zündtemperatur des Rußes herab, eine Abreinigung des Filters erfolgt aber trotzdem erst bei Temperaturen, die realistisch nur selten erreicht werden.

Aufgabe der Erfindung ist es, ein Beschichtungsmaterial zu schaffen, das die Zündtemperatur vermindert und ein kontinuierliches Abreinigen des Filtermaterials durch Oxidation des Dieselrußes ermöglicht.

Es wurde nun gefunden, daß die Zündtemperatur des Dieselrußes auf einem Filter durch dessen Beschichtung mit einem katalytisch hochaktiven Material soweit abgesenkt werden kann, daß eine Regenerierung während des normalen Fahrbetriebes möglich ist. Das erfindungsgemäße katalytisch aktive Material enthält ein Edelmetall der Platingruppe in hoher Verteilung, so daß die erforderliche Edelmetallmenge zum Erreichen niedriger Zündtemperaturen sehr gering ist. Die hohe Verteilung der Edelmetallmenge wird durch Dotieren eines zeolithischen Grundkörpers mit dem Edelmetall der Platingruppe erreicht.

Gegenstand der Erfindung ist eine katalytisch aktive Beschichtung für Dieselruß-Filter zur Herabsetzung der Zündtemperatur von auf dem Filter befindlichem Dieselruß, die dadurch gekennzeichnet ist, daß die katalytisch aktive Substanz aus einem metalldotierten Zeolith besteht. Im Rahmen der Erfindung sind alle ausreichend temperaturbeständigen Zeolithe verwendbar. Es werden Zeolithe mit einer Kristallgröße von bis zu 4 µm verwendet. Prinzipiell können jedoch auch größere Zeolith-Kristalle verwendet werden. Die Metallkomponente besteht im wesentlichen aus einem Metall der Platingruppe. Zusätzlich kann noch ein Metall der Nebengruppen I, II, V, VI oder VII oder eine Kombination derselben in den Zeolith eingebracht werden.

Als besonders günstig zur Herabsetzung der Zündtemperatur hat sich die Dotierung eines Zeolithen aus der Mordenit-Gruppe mit Platin und Nickel erwiesen, wobei das Atomverhältnis Pt:Ni zwischen 1:20 und 20:1 beträgt. Durch den Zeolith kann hierbei eine besonders hohe Verteilung der aktiven Komponenten erreicht werden, so daß mit einem geringen Edelmetallgehalt eine hohe katalytische Aktivität erreicht wird.

Um eine Filterwirkung zu erzielen, sollte die erfindungsgemäße katalytische Masse auf einen strukturellen Verstärker aufgebracht werden. Geeignet hierzu sind alle bekannten Filterelemente, wie Packungen aus Mineral- oder Metallwolle, keramischer Schaum oder monolithische Wabenkörper. Besonders geeignet ist ein monolithischer Cordierit-Wabenkörper mit wechselseitig verstopften Kanälen, wie in Fig. 2 beschrieben. Die Wirkung des katalytischen Dieselruß-Filters kann auch dadurch gesteigert werden, daß vor dem Auftragen der katalytisch aktiven Masse ein inertes keramisches Material aus Aluminium-, Silicium-, Titan- oder Zirkonoxid, oder eine Kombination aus diesen Materialien auf das Filter aufgetragen wird, oder die katalytisch aktive Masse beim Auftragen mit diesen Materialien verdünnt wird.

Die Erfindung wird im Folgenden anhand von Ausführungsbeispielen und Figuren näher erläutert:

Fig. 1: Cordierit-Wabenkörper: Üblicher Ausschnitt eines Wabenkörpers aus Cordierit, wie er in Laboranlagen zum Testen von Dreiweg-Katalysatoren verwendet wird.

Fig. 2: Diesel-Partikelfilter:Ausschnitt eines Diesel-Partikelfilters aus Cordierit mit wechselseitig verstopften Kanälen, so daß das Abgas gezwungen wird, durch die Keramikwand zu strömen, wodurch der Dieselruß zurückgehalten wird.

Fig. 3: Ruß-Konversion von katalytisch beschichtetem im Vergleich zum unbeschichteten Wabenkörper: Als Vergleichsgröße wurde die aus der Rußverbrennung entstehende $CO_2$-Menge in vppm gewählt. Aufgetragen ist die Differenz der bei der Verbrennung entstehenden $CO_2$-Menge vom beschichteten zum unbeschichteten Träger. Während bei dem unbeschichteten Wabenkörper bis zu Temperaturen um 450°C keine Rußverbrennung zu beobachten ist, setzt bei dem mit der katalytischen Masse nach Beispiel 4 beschichteten Filter bereits ab 250°C eine $CO_2$-Entwicklung ein, die von abbrennendem Ruß herrührt.

Fig. 4: Konversion aller gasförmigen Schadstoffe [%] des katalytisch beschichteten Wabenkörpers: Die Abbildung zeigt deutlich die vollständige CO-Konversion schon bei 300°C. Propan wird erst oberhalb 400°C merklich umgesetzt. Oberhalb dieser Temperatur ist auch eine Konversion von NO zu beobachten.

Fig. 5: Konversion [%] und Druckverlust [bar] des katalytisch beschichteten Dieselruß-Filters: Die Abbildung beweist, daß durch die katalytisch aktive Beschichtung des Rußfilters eine Initiierung des Rußabbrennvorganges schon ab einer Temperatur von 420°C erfolgt. Bei 430°C sind schon 25% des Rußes abgebrannt, was zu einer Reduzierung des Druckverlustes im Filter von 2.2 bar auf 0.7 bar führt. Ein weiteres wesentliches Merkmal der katalytisch aktiven Beschichtung nach Beispiel 5 ist, daß der Ruß nahezu ausschließlich zu $CO_2$ verbrannt wird.

Fig. 6: Strukturmodell eines undotierten Zeolithen (undotierter Mordenit) mit Blick in Richtung der großen Kanäle.

Fig. 7: Strukturmodell eines metalldotierten Zeolithen (metalldotierter Mordenit) mit Blick in Richtung der großen Kanäle.

Beispiel 1: Herstellung der katalytisch aktiven Substanz

30ml einer Lösung von $[Pt(NH_3)_4]Cl_2{}^*H_2O$ (Konz.: 20g Pt/l) wurden zu 20g NaY-Zeolith und 20ml $H_2O$ gegeben. Die Suspension wurde 24h im Erlenmeyerkolben gerührt, anschließend filtriert und 3 mal mit $H_2O$ gewaschen. Der Filterkuchen wurde bei 150°C getrocknet und dann im Rohrofen 2h bei 250°C mit $N_2$ und 4h bei 250°C mit verdünntem $H_2$ behandelt.

Beispiel 2: Herstellung der katalytisch aktiven Substanz

39g $Ni(NO_3)_2{}^*6H_2O$ wurden in 1.5l $H_2O$ gelöst. Hierzu wurden 30ml einer wässrigen Lösung von $[Pt(NH_3)_4]Cl_2{}^*H_2O$ (Konz.: 20g Pt/l) und 40g H-Mordenit gegeben. Die Suspension wurde 48h unter Rückfluß gekocht, anschließend filtriert und 3 mal mit heißem $H_2O$ gewaschen. Der Filterkuchen wurde bei 150°C getrocknet und dann im Rohrofen 2h bei 350°C mit $N_2$ und 4h bei 400 °C mit verdünntem $H_2$ behandelt.

Beispiel 3: Herstellung der katalytisch aktiven Substanz

30ml einer Lösung von $[Pt(NH_3)_4]Cl_2{}^*H_2O$ in Wasser (Konz.: 20g Pt/l) wurden zu 17g säureausgetauschtem Mordenit gegeben. Die Suspension wurde 24 h im Erlenmeyerkolben gerührt, anschließend filtriert und 3 mal mit $H_2O$ gewaschen. Nach dem Trocknen bei 150 °C wurde der Filterkuchen 4 h bei 300°C an Luft kalziniert und anschließend 4h bei 250°C in verdünntem $H_2$ reduziert.

Beispiel 4: Beschichten des Cordierit-Wabenkörpers

Ein nach Beispiel 2 präparierter Zeolith-Katalysator wurde durch Eintauchen eines Cordierit-Wabenkörpers in eine wässrige Zeolith-Aufschlämmung (0.2g Zeolith/ml Wasser) auf den Träger aufgebracht. Nach dem Trocknen wurde der beschichtete Träger 4 Stunden lang bei 550°C im Muffelofen kalziniert. Durch eine Wiederholung dieses Beschichtungsvorganges wurde 0.767g metalldotierter Zeolith auf dem 17.672g schweren Träger fixiert.

Beispiel 5: Beschichtung des Filters

Ein Rußfilter gemäß Fig. 2 (Masse 90.939g) wurde durch zweimaliges Eintauchen in eine wässrige Aufschlämmung eines nach Beispiel 2 präparierten Zeolith-Katalysatorpulvers mit diesem beschichtet. Nach dem Eintauchen wurde der Cordierit-Filter jeweils getrocknet und 4h bei 550°C im Muffelofen kalziniert. Durch die beiden Tauchvorgänge wurden insgesamt 15.64g der katalytisch aktiven Beschichtung aufgetragen.

Beispiel 6: Test im Laborreaktor

Der nach Beispiel 4 beschichtete Wabenkörper wurde zusammen mit einem unbeschichteten Wabenkörper mit einem speziellen Probenhalter in die Auspuffanlage eines Nissan Patrol 3.3 Diesel montiert und 30 min im normalen Fahrbetrieb (Stadt, Landstraße) berußt. Anschließend wurden die Wabenkörper

in eine Laborapparatur zur Bestimmung der Zündtemperatur des Rußes eingebaut. Hierzu wurden die Wabenkörper von einem synthetischen Abgas mit folgender Zusammensetzung mit 15l/min durchströmt:

Propan:1000 vppm
CO:1000 vppm
NO:750 vppm
$O_2$:5 Vol.-%
$H_2O$:8 Vol.-%
$N_2$:Rest

Während des Versuches wurde die Abgastemperatur unter ständiger Analyse der Gaszusammensetzung vor und hinter dem Wabenkörper schrittweise erhöht. Hierbei zeigte sich, wie in Fig. 3 und 4 gezeigt wird, daß bei em Wabenkörper mit der katalytisch aktiven Beschichtung nach Beispiel 4 eine CO-Konversion schon bei 200°C einsetzt und ab 300°C kein CO mehr im Abgas festgestellt werden kann. Im Gegensatz zum unbeschichteten Filter, bei dem keine Rußverbrennung festgestellt wurde, zeigt der beschichtete Filter eine deutlich erkennbare Konversion der Rußpartikel. Diese setzt bereits ab 250°C ein und erreicht bei 300°C ein hohes Ausmaß. Oberhalb einer Temperatur von 400°C wurde auch eine Konversion von Propan und NO festgestellt.

Beispiel 7: Anwendungstechnische Prüfung

Das nach Beispiel 5 präparierte katalytische Rußfilter wurde mit 28.2g synthetischem Ruß beladen. Anschließend wurden in einer Laborapparatur Zündtemperatur und Druckverlust im Filter bestimmt. Hierzu wurde das Filter von einer synthetischen Gasmischung mit 100l/min durchströmt. Diese enthielt 10 Vol.-% $O_2$ und 10 Vol.-% $H_2O$ in $N_2$. Im Laufe der Zeit wurde die Gastemperatur kontinuierlich erhöht. Wie in Fig. 5 zu sehen wird schon ab einer Temperatur von 420°C ein Abbrennen des Rußes erreicht. Im Vergleich zu einem unbeschichteten Filter konnte die Zündtemperatur des Rußes also um ca. 130°C abgesenkt werden. Ebenso wird schon bei einer Temperatur von 430°C eine Reduzierung des Rückdruckes in der Filteranlage von 2.2 bar auf 0.7 bar erreicht. Bemerkenswert ist auch, daß nahezu die gesamte Menge des Rußes innerhalb sehr kurzer Zeit zu $CO_2$ abgebrannt wurde. CO wird im Abgas nicht festgestellt.

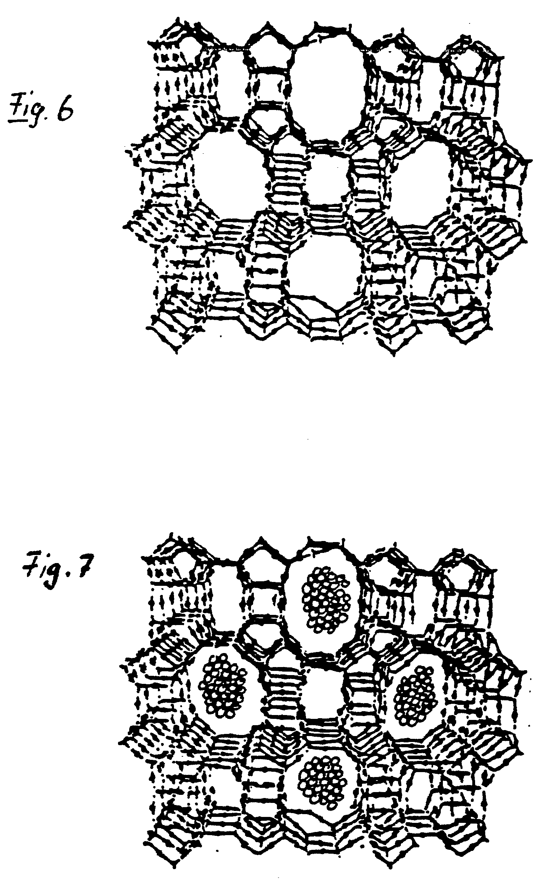

Fig. 6 zeigt das Strukturmodell eines Zeolithen (Mordenit) mit Blick in Richtung der großen Kanäle. In Fig. 7 ist schematisch das Strukturmodell eines erfindungsgemäß metalldotierten Mordenits dargestellt. Der Mordenit weist Pt-Cluster in den großen Kanälen auf. Das Reaktionsschema des Verfahrens in den Mordenit-Poren ist wie folgt:

$M - H \;+\; Pt^{2+}$ **M = Mordenit-Anionengitter**

$\downarrow \Delta, H_2O$

$M - Pt^{+} \;+\; H^{+}$

$\downarrow \Delta, O_2$

$[M - H \;+\; PtO]$ **PtO in den Mordenitkanälen**

$\downarrow \Delta, H_2$

$[M - H \;+\; Pt]$ **Pt-Cluster in den Mordenitkanälen**

**Patentansprüche**

1. Katalytisch aktive Beschichtung von Filtermaterial für Dieselruß-Filter, dadurch gekennzeichnet, daß die Beschichtung aus metalldotiertem Zeolith besteht.

2. Katalytisch aktive Beschichtung nach Anspruch 1, dadurch gekennzeichnet, daß die zeolithische Beschichtung aus Zeolith mit einem Porendurchmesser von 0.55 bis 1.3nm besteht und die Kristallgröße des Zeolithen bis zu 4µm beträgt.

3. Katalytisch aktive Beschichtung nach Ansprüchen 1 und 2, dadurch gekennzeichnet, daß die Beschichtung ein Zeolith der Mordenit-Gruppe ist.

4. Katalytisch aktive Beschichtung nach Ansprüchen 1 bis 3, dadurch gekennzeichnet, daß der Zeolith mit einem Metall der Platingruppe beladen ist.

5. Katalytisch aktive Beschichtung nach Anspruch 4, dadurch gekennzeichnet, daß das Metall der Platingruppe um Platin ist.

6. Katalytisch aktive Beschichtung nach Ansprüchen 1 bis 5, dadurch gekennzeichnet, daß der Zeolith zusätzlich mit einem Metall der Gruppen IB, IIB, VB, VIB oder VIIB des Periodensystems oder einer Kombination derselben beladen ist.

7. Katalytisch aktive Beschichtung nach Anspruch 6, dadurch gekennzeichnet, daß das Metall Nickel, Kupfer, Mangan, Vanadin oder Silber, oder eine Kombination derselben ist.

8. Katalytisch aktive Beschichtung nach Ansprüchen 6 und 7, dadurch gekennzeichnet, daß das Metall um Nickel ist.

9. Katalytisch aktive Beschichtung nach Ansprüchen 4 bis 8, dadurch gekennzeichnet, daß das Atomverhältnis Pt:Ni im Zeolith zwischen 1:20 und 20:1 beträgt.

10. Katalytisches Dieselruß-Filter, dadurch gekennzeichnet, daß die katalytisch aktive Beschichtung nach Ansprüchen 1 bis 9 auf einem als struktureller Verstärker dienenden Filterelement aufgebracht ist.

11. Katalytisches Dieselruß-Filter nach Anspruch 10, dadurch gekennzeichnet, daß als Filterelement eine Packung aus Mineral- oder Metallwolle, ein keramischer Schaum, ein monolithischer Wabenkörper oder ein monolithischer Wabenkörper mit wechselseitig verschlossenen Kanälen verwendet wird.

12. Katalytisches Diesel-Rußfilter nach den Ansprüchen 10 und 11, dadurch gekennzeichnet, daß das Filterelement mit einem inerten keramischen Material beschichtet ist, auf das die katalytisch aktiven Massen nach Anspruch 1 bis 9 aufgebracht sind.

13. Katalytisches Dieses-Rußfilter nach den Ansprüchen 10 bis 12, dadurch gekennzeichnet, daß die katalytisch aktive Beschichtung nach Anspruch 1 bis 9 gleichzeitig mit einem inerten Oxidmaterial von Aluminium, Titan, Zirkon oder Silicium oder einer Kombination derselben aufgebracht ist.

**Revendications**

1. Revêtement à effet catalytique de matériau filtrant pour filtre à suie de moteur Diesel, caractérisé en ce que le revêtement est constitué de zéolithe dopée de métal.

2. Revêtement à effet catalytique selon la revendication 1, caractérisé en ce que le revêtement zéolithique est constitué de zéolithe avec un diamètre de pores de 0,55 à 1,3nm et que la taille des cristaux de zéolithe peut atteindre 4 µm.

3. Revêtement à effet catalytique selon l'une des revendications 1 et 2, caractérisé en ce que le revêtement est constitué d'une zéolithe du groupe de la mordénite.

4. Revêtement à effet catalytique selon l'une des revendications 1 à 3, caractérisé en ce que la zéolithe est chargée d'un métal du groupe du platine.

5. Revêtement à effet catalytique selon la revendication 4, caractérisé en ce que le métal du groupe du platine est du platine.

6. Revêtement à effet catalytique selon l'une des revendications 1 à 5, caractérisé en ce que la zéolithe est chargée, en plus, d'un métal appartenant aux groupes IB, IIB, VB, VIB ou VIIB de la classification périodique des éléments, ou d'une combinaison de ceux-ci.

7. Revêtement à effet catalytique selon la revendication 6, caractérisé en ce que le métal est du nickel, du cuivre, du manganèse, du vanadium ou de l'argent, ou une combinaison de ceux-ci.

8. Revêtement à effet catalytique selon l'une des revendications 6 et 7, caractérisé en ce que le métal est du nickel.

9. Revêtement à effet catalytique selon l'une des revendications 4 à 8, caractérisé en ce que le rapport atomique Pt:Ni dans la zéolithe est compris entre 1:20 et 20:1.

10. Filtre à suie catalytique pour moteur Diesel, caractérisé en ce que le revêtement à effet catalytique selon l'une des revendications 1 à 9 est appliqué sur un élément filtrant servant de structure de renforcement.

11. Filtre à suie catalytique pour moteur Diesel selon la revendication 10, caractérisé en ce qu'il utilise comme élément filtrant une garniture de laine minérale ou métallique, une mousse céramique, un élément nid d'abeilles monolithique ou un élément nid d'abeilles monolithique avec des canaux alternativement fermés.

12. Filtre à suie catalytique pour moteur Diesel selon l'une des revendications 10 et 11, caractérisé en ce que l'élément filtrant est revêtu d'un matériau céramique inerte sur lequel sont appliquées les masses

à effet catalytique selon l'une des revendications 1 à 9.

13. - Filtre à suie catalytique pour moteur Diesel selon l'une des revendications 10 à 12, caractérisé en ce que le revêtement catalytique selon l'une des revendications 1 à 9 est appliqué simultanément avec un matériau d'oxyde d'aluminium, de titane, de zirconium ou de silicium ou d'une combinaison de ceux-ci.

**Claims**

1. Catalytic effective layer of filter material for dieselsoot filter, characterised in that the layer comprises metaldoped zeolite.

2. Catalytic effective layer according to claim 1, characterised in that the zeolite layer comprises zeolite with a pore diameter of 0.55 to 1.3 nm and the crystal size of the zeolite is up to 4 μm.

3. Catalytic effective layer according to claims 1 and 2, characterised in that the layer is a zeolite of the mordenite group.

4. Catalytic effective layer according to claims 1 to 3, characterised in that the zeolite is charged with a metal of the platinum group.

5. Catalytic effective layer according to claim 4, characterised in that the metal of the platinum group is platinum.

6. Catalytic effective layer according to claims 1 to 5, characterised in that the zeolite is additionally charged with a metal of groups IB, IIB, VB, VIB, or VIIB of the periodic table or with a combination thereof.

7. Catalytic effective layer according to claim 6, characterised in that the metal is nickel, copper, manganese, vanadium or silver or a combination thereof.

8. Catalytio effective layer according to claims 6 and 7, characterised in that the metal is nickel.

9. Catalytic effective layer according to claims 4 to 8, characterised in that the atomic ratio Pt:Ni in the zeolite is between 1:20 and 20:1.

10. Catalytic diesel-soot filter characterised in that the catalytic effective layer according to claims 1 to 9 is coated on to a filter element which serves as a structural intensifier.

11. Catalytic diesel-soot filter according to claim 10, characterised in that a packing of mineral or metal wool, a ceramic foam, a monolithic honeycomb body or a monolithic honeycomb body with alternately closed ducts is used as a filter component.

12. Catalytic diesel-soot filter according to claims 10 and 11, characterised in that the filter element is coated with an inert ceramic material onto which the catalytic effective substances according to claims 1 to 9 are coated.

13. Catalytic diesel-soot filter according to claims 10 to 12, characterised in that the catalytic effective layer according to claims 1 to 9 is coated at the same time with an inert oxide of aluminium, titanium, zirconium, or silicon or a combination thereof.

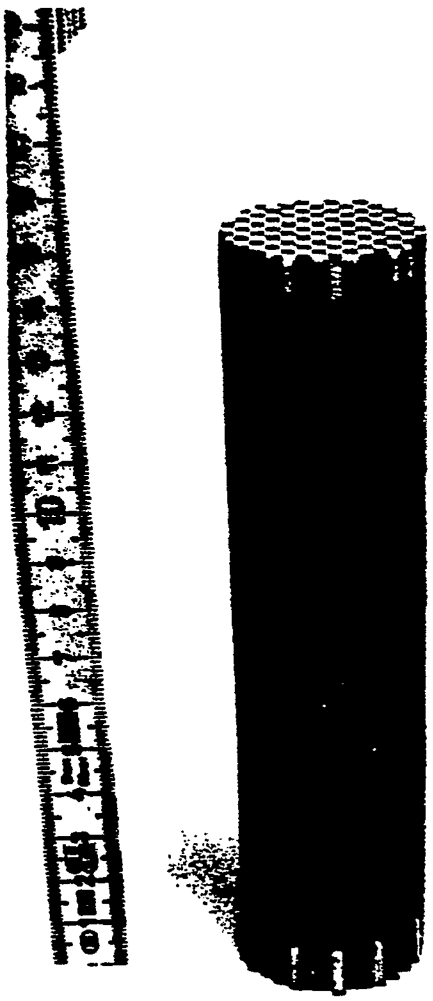

Fig. 1

Fig. 2

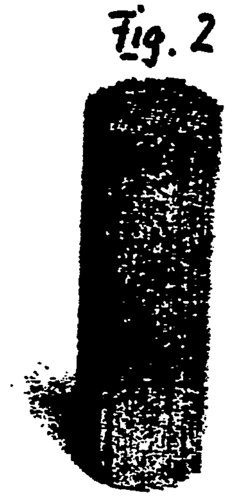

Fig. 3

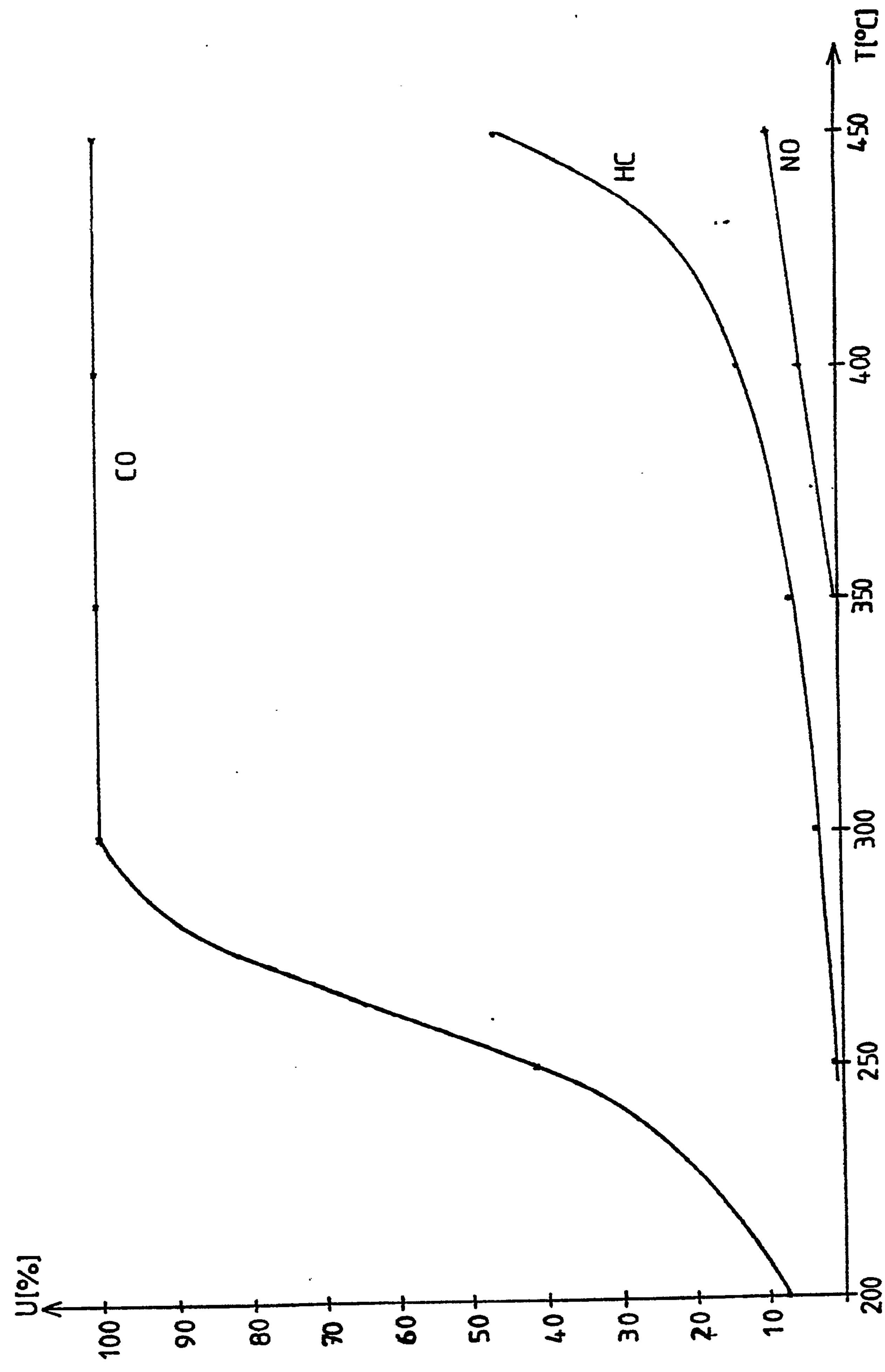

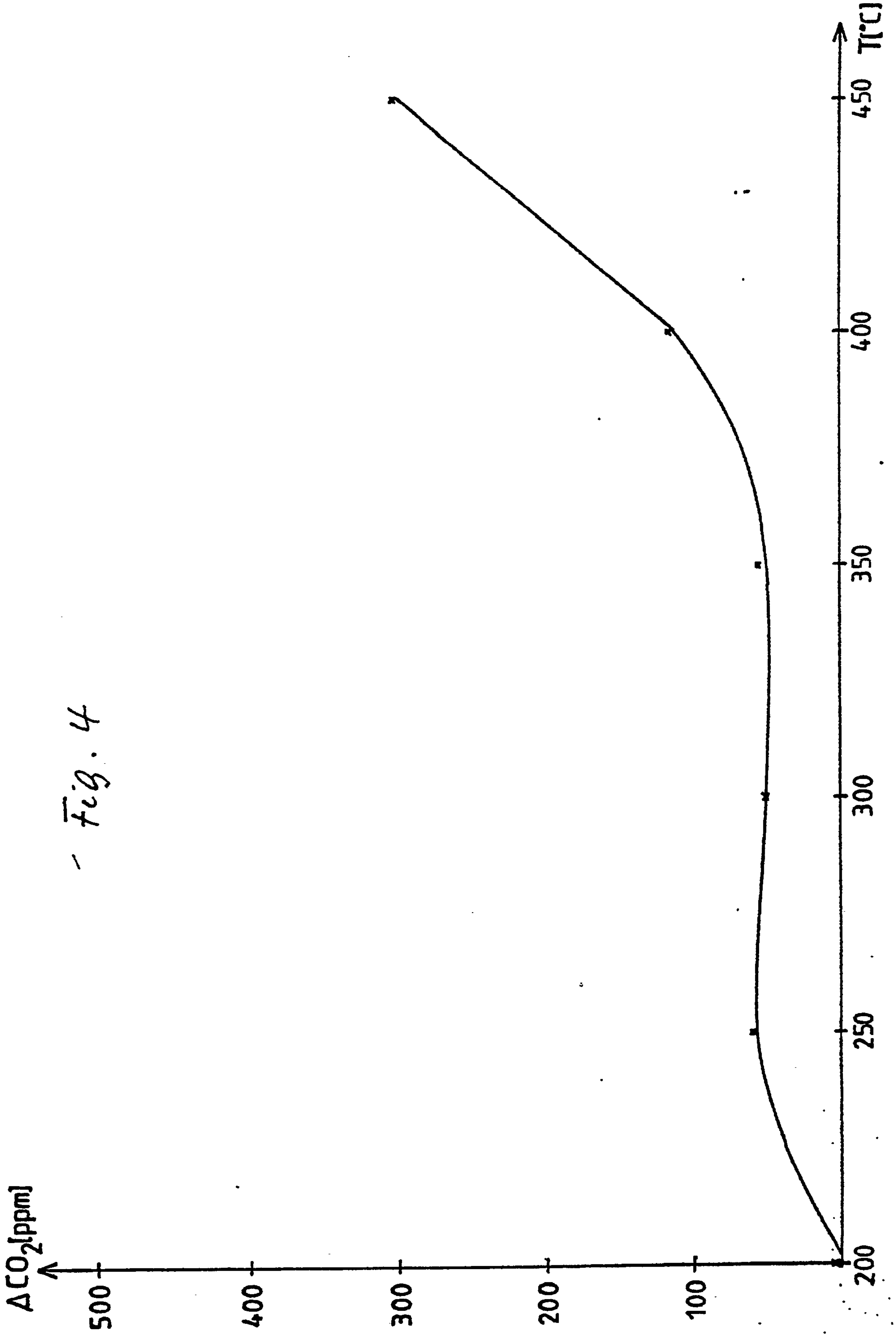


Fig. 4

Fig. 5

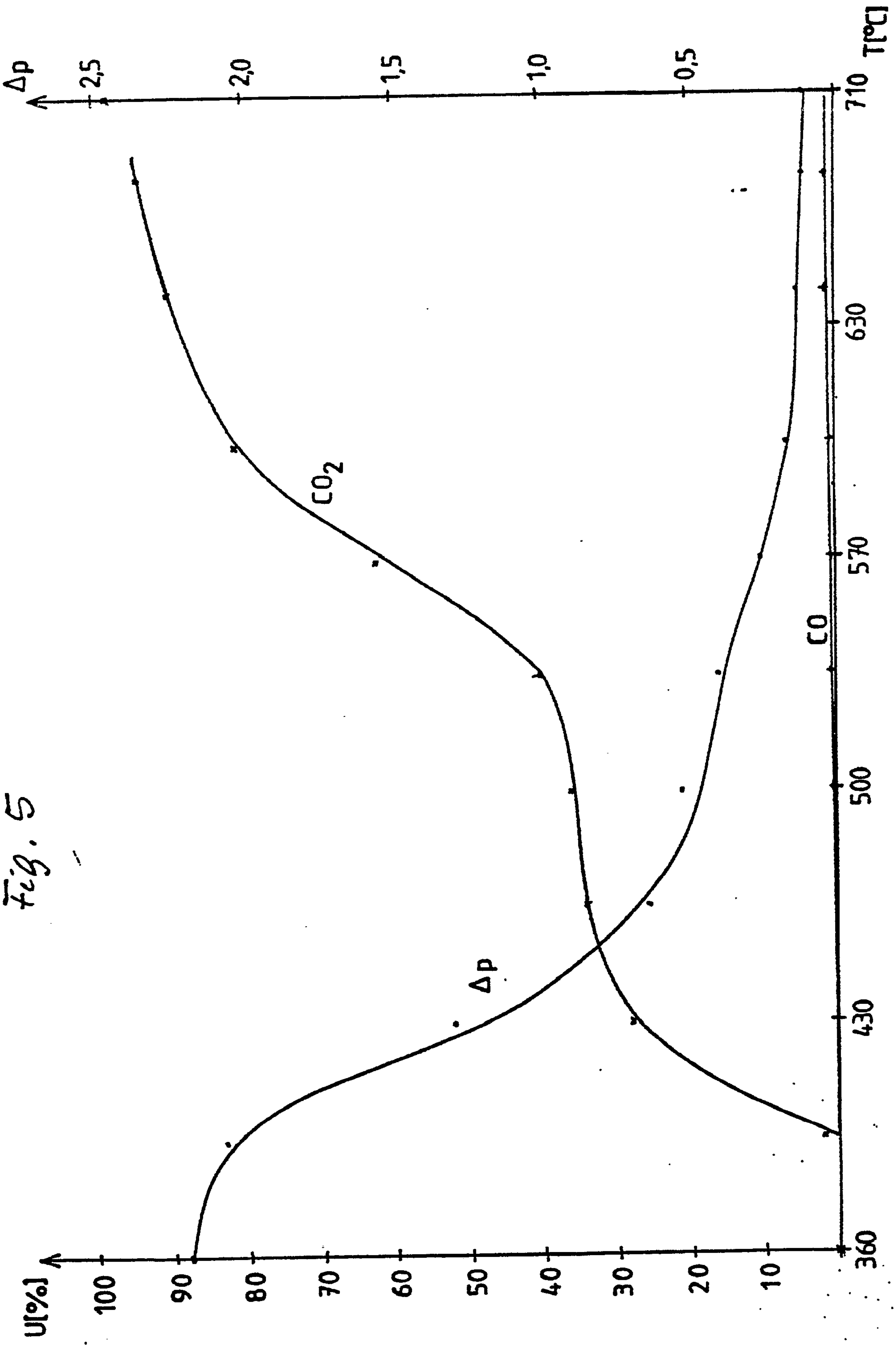
U[%]
100
90
80
70
60
50
40
30
20
10
360
430
500
570
630
710
T[°C]
Δp
2,5
2,0
1,5
1,0
0,5
$CO_2$
CO
Δp

Fig. 6

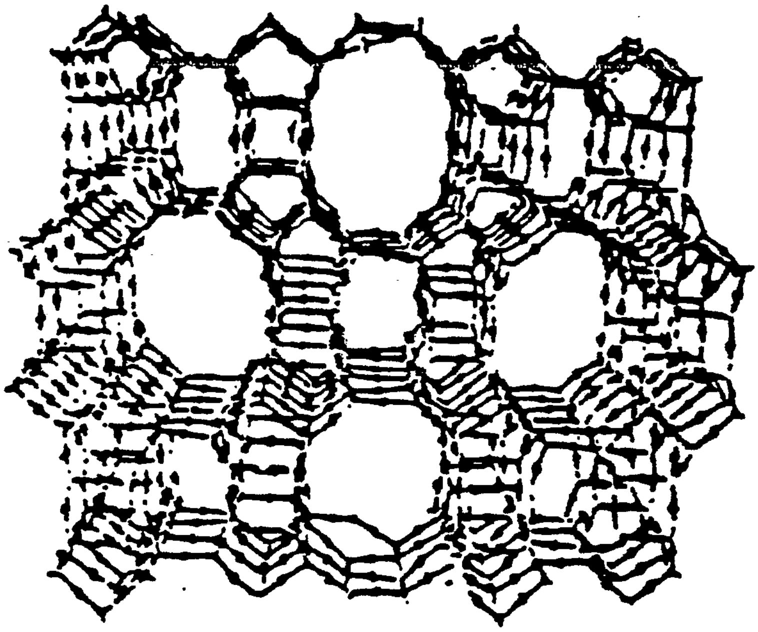

Fig. 7